(19) **Europäisches Patentamt / European Patent Office / Office européen des brevets**

(11) **EP 4 156 120 B1**

(12) **EUROPEAN PATENT SPECIFICATION**

(45) Date of publication and mention of the grant of the patent:
**20.09.2023 Bulletin 2023/38**

(21) Application number: **22159854.3**

(22) Date of filing: **03.03.2022**

(51) International Patent Classification (IPC):
**G06V 10/25** (2022.01)     **G06V 10/34** (2022.01)
**G06V 10/56** (2022.01)

(52) Cooperative Patent Classification (CPC):
**G06V 10/25; G06V 10/34; G06V 10/56**

(54) **COLLATION DEVICE, PROGRAM, AND COLLATION METHOD**

VORRICHTUNG, PROGRAMM UND VERFAHREN ZUR ZUSAMMENFÜHRUNG

DISPOSITIF DE COLLATION, PROGRAMME ET PROCÉDÉ DE COLLATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.09.2021 JP 2021155876**

(43) Date of publication of application:
**29.03.2023 Bulletin 2023/13**

(73) Proprietor: **FUJIFILM Business Innovation Corp.**
**Minato-ku**
**Tokyo (JP)**

(72) Inventors:
• **SATO, Ken**
  **Yokohama-shi (JP)**
• **MOTOSUGI, Yukari**
  **Yokohama-shi (JP)**
• **YAMAMOTO, Shigeru**
  **Yokohama-shi (JP)**
• **OSHIMA, Minoru**
  **Yokohama-shi (JP)**

(74) Representative: **Becker, Eberhard**
**Becker Kurig & Partner**
**Patentanwälte mbB**
**Bavariastraße 7**
**80336 München (DE)**

(56) References cited:
**EP-A1- 2 983 134       EP-A1- 3 264 363**
**US-A1- 2013 114 911**

**Description**

BACKGROUND OF THE INVENTION

(i) Field of the Invention

The present invention relates to a collation device, a program, and a collation method.

(ii) Description of Related Art

JP6455679B discloses a processing system that has satin forming means for forming a satin pattern for identifying a part, a product, or a product having a part as a component, on a part or a product having an information display body attached that displays information related to the part, the product, or the product having the part as a component.
JP6708981B discloses a technology that generates a layer that contains minute particles on an object and has an indefinite planar shape, acquires an image of the generated layer, and extracts a feature amount that depends on a planar shape of the layer and a distribution of particles as an individual identifier of the object, from an image.
JP4930789B discloses an individual recognition device that recognizes an overlapping object in a captured image for each individual and includes means for forming a binarized image of the captured image, means for extracting an edge from the captured image, means for forming an image in which the edge is removed from the binarized image by performing difference processing of the binarized image and the edge, and means for combining the binarized images separated by the edge based on a length of the object in the image.
EP 2 983 134 A1 discloses a identification system with an image-feature storing means, an extracting means, an acquiring means, and an identifying means. The image-feature storing means stores image features of texture patterns formed on components or products. The extracting means extracts an n-dimensional-symbol image and a texture-pattern image from a taken image containing at least the following: an n-dimensional symbol that represents information regarding a component, a product, or a product comprising said component; and a texture pattern formed on said component or product. The acquiring means acquires the aforementioned information regarding the component or product. The identifying means identifies the component, product, or component-comprising product by matching image features of the extracted texture-pattern image against the image features stored by the image-feature storing means.
US 2013/114911 A1 discloses a post processing method in which an automated, computerized method is provided for processing an image, including the steps of providing an image file depicting an image, in a computer memory, generating an intrinsic image corresponding to the image and modifying the intrinsic image by performing an edgepreserving blur of illumination.

SUMMARY OF THE INVENTION

In a system that uniquely identifies an object by photographing a surface image of the object to acquire a collation area, and performing image collation between a pre-registered image of a random pattern of a fine pattern on a surface of the object with the collation area, in a case where a user photographs the collation area of the object by using imaging means such as a mobile terminal and collates with the registered image, in a case where the collation area exists on a printing substrate having unevenness such as a hologram, it is difficult to detect the collation area due to the unevenness of the printing substrate.
An object of the present invention is to provide a technology capable of detecting a collation area even in a case where the collation area exists on a printing substrate having unevenness such as a hologram. Accordingly, the present invention is provided in appended claims 1, 9, and 10. Beneficial embodiments are provided in the dependent claims. The following disclosure serves a better understanding of the present invention.
According to a first aspect of the present disclosure, there is provided a collation device including a processor configured to, by executing a program: (a) acquire a photographed image including a collation area provided on a printing substrate having unevenness, (b) simultaneously execute smoothing processing and shading difference enhancement processing on the photographed image, and (c) detect the collation area based on an image obtained by simultaneously executing the smoothing processing and the shading difference enhancement processing.
According to a second aspect of the present disclosure, there is provided the collation device according to the first aspect in which the processor may be configured to simultaneously execute the smoothing processing and the shading difference enhancement processing on the photographed image at a ratio in accordance with the printing substrate.
According to a third aspect of the present disclosure, there is provided the collation device according to the first or second aspect in which the processor may be configured to: between the (b) and the (c), further execute the shading difference enhancement processing on the image obtained by simultaneously executing the smoothing processing and the shading difference enhancement processing.

According to a fourth aspect of the present disclosure, there is provided the collation device according to any one of the first to third aspects in which the processor may be configured to: between the (b) and the (c), remove straight lines or curves existing at specific boundaries in an HSV color space as noise from the image obtained by simultaneously executing the smoothing processing and the shading difference enhancement processing.

According to a fifth aspect of the present disclosure, there is provided the collation device according to any one of the first to fourth aspects in which the processor may be configured to: between the (b) and the (c), execute binarization processing on the image obtained by simultaneously executing the smoothing processing and the shading difference enhancement processing, and remove straight lines or curves that do not match a predetermined shape of the collation area as noise from the image obtained by the binarization processing.

According to a sixth aspect of the present disclosure, there is provided the collation device according to any one of the first to fifth aspects in which the processor may be configured to: between the (b) and the (c), execute binarization processing on the image obtained by simultaneously executing the smoothing processing and the shading difference enhancement processing, and calculate centroid coordinates of a plurality of intersections, which are candidates for vertices constituting a predetermined shape of the collation area, as coordinates of the vertices with respect to the image obtained by the binarization processing.

According to a seventh aspect of the present disclosure, there is provided the collation device according to the sixth aspect in which the processor may be configured to: perform complementary processing of coordinates of remaining vertices by using the shape of the collation area, in a case where coordinates of all the vertices constituting the shape of the collation area are not calculated.

According to an eighth aspect of the present disclosure, there is provided the collation device according to any one of the first to seventh aspects in which the printing substrate may be paper or a hologram.

According to a tenth aspect of the present disclosure, there is provided the collation device according to any one of the first to eighth aspects in which the processor may be configured to: simultaneously execute the smoothing processing and the shading difference enhancement processing on the photographed image by mean-shift filtering processing.

According to an eleventh aspect of the present disclosure, there is provided the collation device according to the tenth aspect in which the processor may be configured to: variably set a color space radius sr and a pixel space radius sp in the mean-shift filtering processing in accordance with the printing substrate.

According to a twelfth aspect of the present disclosure, there is provided the collation device according to the eleventh aspect in which the processor may be configured to: set the color space radius sr relatively large in a case where the printing substrate is a hologram, as compared with a case where the printing substrate is paper.

According to a thirteenth aspect of the present disclosure, there is provided a program causing a computer to execute a process for a processor, the process including: (a) acquiring a photographed image including a collation area provided on a printing substrate having unevenness; (b) simultaneously executing smoothing processing and shading difference enhancement processing on the photographed image; and (c) detecting the collation area based on an image obtained by simultaneously executing the smoothing processing and the shading difference enhancement processing.

According to a fourteenth aspect of the present disclosure, there is provided a collation method including: (a) acquiring a photographed image including a collation area provided on a printing substrate having unevenness; (b) simultaneously executing smoothing processing and shading difference enhancement processing on the photographed image; and (c) detecting the collation area based on an image obtained by simultaneously executing the smoothing processing and the shading difference enhancement processing.

According to the first, ninth, tenth, thirteenth, and fourteenth aspects, even in a case where a collation area exists on a printing substrate having unevenness such as a hologram, the collation area may be detected.

Further, according to the second, eleventh, and twelfth aspects, the collation area may be detected regardless of the printing substrate.

Further, according to the third to seventh aspects, the collation area may be detected more stably.

According to the eighth aspect, the collation area may be detected even in a case where the printing substrate is paper or a hologram.

BRIEF DESCRIPTION OF THE DRAWINGS

Exemplary embodiment(s) of the present invention will be described in detail based on the following figures, wherein:

Fig. 1 is a schematic plan view of a hologram printing substrate and an ink portion of an exemplary embodiment;
Fig. 2 is a schematic view of a hologram printing substrate and an ink portion of an exemplary embodiment;
Fig. 3 is an explanatory diagram showing an original image, an image obtained by performing smoothing processing on the original image, and an image obtained by performing shading difference enhancement processing on the original image;

Fig. 4 is a configuration diagram of a registered image photographing machine and a collation image photographing machine of an exemplary embodiment;

Fig. 5 is a block diagram of a configuration of a collation device of an exemplary embodiment;

Fig. 6 is a flowchart showing whole processing of an exemplary embodiment;

Fig. 7 is an explanatory diagram for a simultaneous execution of smoothing processing and shading difference enhancement processing of an exemplary embodiment;

Fig. 8 is a configuration diagram for a simultaneous execution of smoothing processing and shading difference enhancement processing of an exemplary embodiment;

Fig. 9 is a flowchart showing detailed processing of mean-shift filtering processing of an exemplary embodiment;

Fig. 10 is an explanatory diagram for mean-shift filtering processing of a hologram printing substrate and a paper printing substrate of an exemplary embodiment;

Fig. 11 is an explanatory diagram for shading difference enhancement processing of an exemplary embodiment;

Fig. 12 is an explanatory diagram for noise removal processing of an exemplary embodiment;

Fig. 13 is an explanatory diagram for unnecessary side removal processing of an exemplary embodiment;

Fig. 14 is a flowchart showing center of gravity calculation processing of intersections of an exemplary embodiment;

Fig. 15 is an explanatory diagram for complementary processing of a disappeared side of an exemplary embodiment; and

Fig. 16 is an explanatory diagram for processing according to a shape of an ink portion and a type of a printing substrate of an exemplary embodiment.

## DETAILED DESCRIPTION OF THE INVENTION

Hereinafter, an exemplary embodiment of the present invention will be described by taking an individual identification system that uniquely identifies an object by photographing a surface image of the object and performing image collation between a registered image and a collation image as an example based on the drawings.

The individual identification system is a technology that registers an image of a part of a surface of an object, specifically about 0.1 to several mm in advance as information unique to the object and uniquely identifies that the object to be collated is the same as the registered object, that is, the object is genuine, and the information unique to the object is, for example, a random pattern by a fine pattern. A satin pattern is a specific example of the random pattern by the fine pattern. The satin pattern is not limited to a surface treatment such as frosted glass, and is a concept that includes not only the satin pattern applied by treatment processing to metal or synthetic resin (plastic or the like), but also a wrinkle pattern obtained by embossing treatment and randomly woven fiber pattern, a random fine dot pattern by printing, and a random particle distribution by printing with ink containing glitter particles. Further, the satin pattern includes not only an unintentionally formed satin pattern but also an intentionally formed satin pattern for identification or collation. In short, the satin pattern is a random pattern that is difficult to control and form. It may be said to be a kind of "artifact metrics" that optically reads such a random pattern and uses the random pattern as information.

Here, a case is assumed in which a printing substrate having unevenness such as a hologram is used as a printing substrate and a polygonal ink portion in which metal particles are dispersed is printed on the printing substrate having such unevenness to form a random pattern.

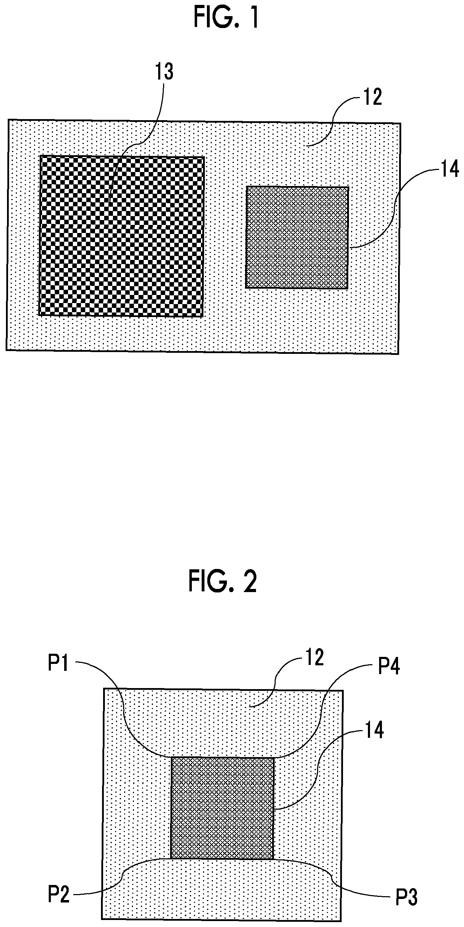

Fig. 1 shows an example of an object 10. In the object 10, a hologram portion 12 as a printing substrate, a QR code (registered trademark) portion 13 printed on the hologram portion 12, and an ink portion 14 printed on the hologram portion 12 are shown. The shape of the ink portion 14 is a polygon, more specifically a square, and the ink portion 14 is registered as a collation area. Further, at the time of collation, the collation area 14 is acquired, and the registered image and a collation area 14 are used for comparison and collation. Note that the collation area is an area of the ink portion 14, and the entire surface or a part of the collation area is used for the registered image and the collation image.

The ink portion 14 is formed by mixing metal particles such as aluminum with powder, and in a case of irradiating the ink portion with light, the light is reflected by the randomly stacked powder metal particles, and shows a pattern of shading in accordance with an intensity of the reflected light. In a case where an irradiation direction of light is changed, the random pattern of shading changes.

Fig. 2 schematically shows a relationship between the hologram portion 12 and the ink portion 14. In order to extract a collation image 18 from the image obtained by photographing the object 10, it is necessary to accurately detect the square ink portion 14 as the collation area as a premise. Specifically, it is necessary to accurately detect the square ink portion 14, that is, four vertices P1, P2, P3, and P4 configuring the square from the image in which unevenness of the hologram portion 12 and unevenness of the ink portion 14 are mixed.

Generally, in a case of extracting an area having a specific shape from a photographed image, there is feature extraction processing or edge extraction processing. However, simply in the feature extraction processing or the edge extraction processing, since both unevenness of the hologram portion 12 and unevenness of the ink portion 14 are extracted as feature points, it is difficult to stably extract the shape of the ink portion 14 due to the rainbow color change of the hologram portion 12.

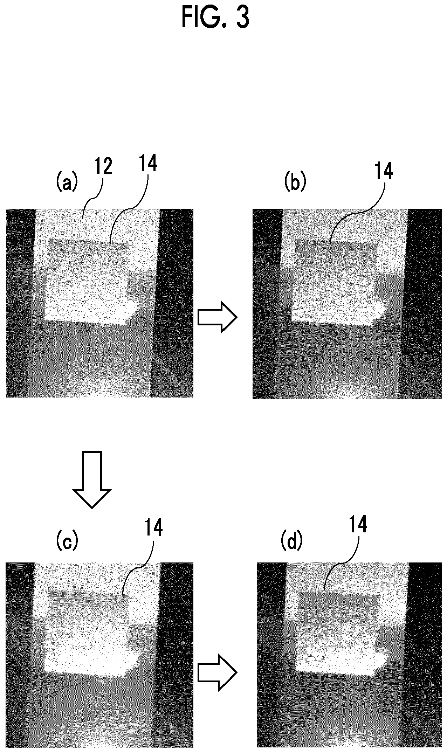

(a) to (d) of Fig. 3 show examples of processing of extracting a shape of the ink portion 14 from a photographed image.

(a) of Fig. 3 is an original image obtained by photographing, and includes both the hologram portion 12 and the ink portion 14.

(b) of Fig. 3 is an image obtained by subjecting the original image to shading difference enhancement processing for extracting features. The unevenness of the ink portion 14 is emphasized by the shading difference enhancement processing, but at the same time, the unevenness of the hologram portion 12 is also emphasized, so that the unevenness of the ink portion 14 is buried in the unevenness of the hologram portion 12.

(c) of Fig. 3 is an image obtained by subjecting the original image to smoothing processing in order to remove the unevenness rather than extracting the features. The unevenness of the hologram portion 12 and the ink portion 14 cannot be completely removed only by the smoothing processing. Further, in a case where the smoothing processing is excessively performed, a contour shape of the ink portion 14 is blurred, and the square shape cannot be extracted.

(d) of Fig. 3 is an image obtained by subjecting the image of (c) of Fig. 3 to shading difference enhancement processing. Although there is a difference between (b) of Fig. 3 and (d) of Fig. 3 that,

(b) of Fig. 3: original image → shading difference enhancement processing, and

(d) of Fig. 3: original image → smoothing processing → shading difference enhancement processing,

it is difficult to extract the square of the ink portion 14 in both cases.

Therefore, in the present exemplary embodiment, the ink portion 14 formed on the hologram portion 12 by performing a series of processing on the original image, in other words, the ink portion 14 as a foreground is stably extracted from the hologram portion 12 as a background of the photographed image.

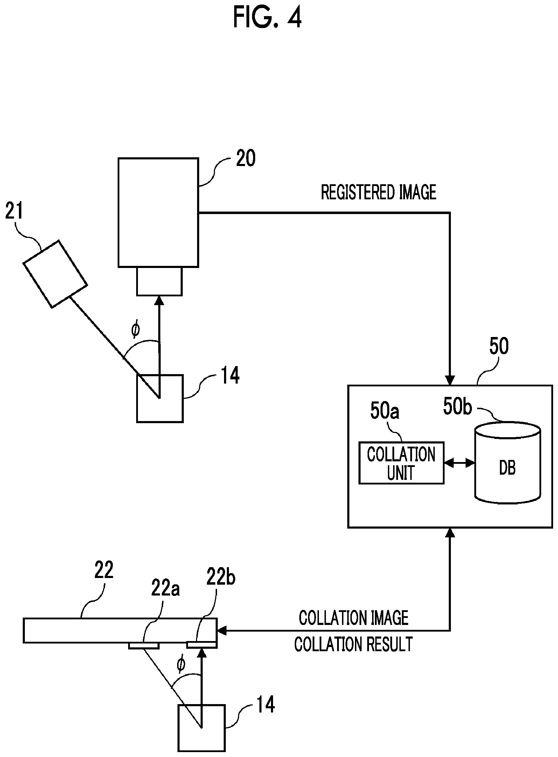

Fig. 4 shows a system configuration of the present exemplary embodiment. The collation system includes a registered image photographing machine 20, a collation image photographing machine 22, and a server computer 50. The registered image photographing machine 20 and the server computer 50, and the collation image photographing machine 22 and the server computer 50 are connected to each other by a communication network.

The object 10 is irradiated with a light source unit 21 such as an LED, and the light reflected from the ink portion 14 of the object 10 is photographed by the registered image photographing machine 20 to acquire a registered image 16. The registered image photographing machine 20 and the light source unit 21 can be composed of dedicated equipment for registration.

An irradiation angle φ of the irradiation light from the light source unit 21 is set to a certain fixed angle. The acquired registered image 16 is transmitted to the server computer 50 and stored in a registered image DB 50b in the server computer 50.

On the other hand, the object 10 is photographed by using a mobile terminal such as a smartphone held by the user of the collation system as the collation image photographing machine 22. The object 10 is irradiated with a light source unit 22a such as an LED mounted on a smartphone or the like, and the light reflected from the ink portion 14 of the object 10 is photographed by a camera unit 22b mounted on the smartphone or the like. An irradiation angle φ of the irradiation light from the light source unit 22a is set to be substantially the same as the angle φ which is the condition in a case where the registered image 16 is acquired. The reason is that, as described above, the random pattern of the ink portion 14 changes depending on the irradiation direction of light, so that it is necessary to set a positional relationship between the light source unit 22a, the camera unit 22b, and the object 10 to be substantially the same as a positional relationship at the time of photographing the registered image 16.

A processor of the collation image photographing machine 22 performs a series of processing on the photographed image to extract the ink portion 14 from the photographed image, further cuts out the collation image 18 from the area of the ink portion 14, and transmits the collation image 18 to the server computer 50 via the communication network. The processing of the processor of the collation image photographing machine 22 will be further described later.

The server computer 50 includes a collation unit 50a and the registered image DB 50b.

The registered image DB 50b is composed of a storage device such as a hard disk or a solid state drive (SSD), and stores an identifier ID for uniquely specifying the object 10 and the registered image 16 in association with each other.

The collation unit 50a is composed of a processor, and stores the registered image 16 received from the registered image photographing machine 20 in the registered image DB 50b in association with the ID of the object 10. Further, the collation unit 50a performs image collation between the collation image 18 received from the collation image photographing machine 22 and the registered image 16 stored in the registered image DB 50b, and outputs the collation result to the collation image photographing machine 22. Specifically, the collation unit 50a reads the registered image 16 from the registered image DB 50b, performs collation calculation with the collation image 18, and calculates a degree of similarity between the two images. For the calculation of the degree of similarity, feature amount matching by feature amount detection, template matching using image shading comparison, and the like can be used. The calculated degree of similarity is compared with a threshold, and in a case where the degree of similarity exceeds the threshold, it is determined that the images match, and in a case where the degree of similarity does not exceed the threshold, it is determined that the images do not match. The collation unit 50a transmits the collation result to the collation image photographing machine 22 via the communication network.

In the image collation, there is an error rate due to fluctuations in the input of the registered image photographing machine 20 or the collation image photographing machine 22 to an image sensor, quantization error, and the like. The error rate consists of two, a false rejection rate, which is the probability of determining false even though it is true, and a false acceptance rate, which is the probability of determining true even though it is false. The two are in a trade-off relationship, and in a case where one decreases, the other increases. Therefore, a threshold is set so that the loss in the application target of the collation determination is the smallest.

Note that a plurality of the registered images 16 may be acquired by changing the irradiation direction of light and registered in the registered image DB 50b of the server computer 50, and the image collation between the plurality of registered images 16 and the collation image 18 may be performed.

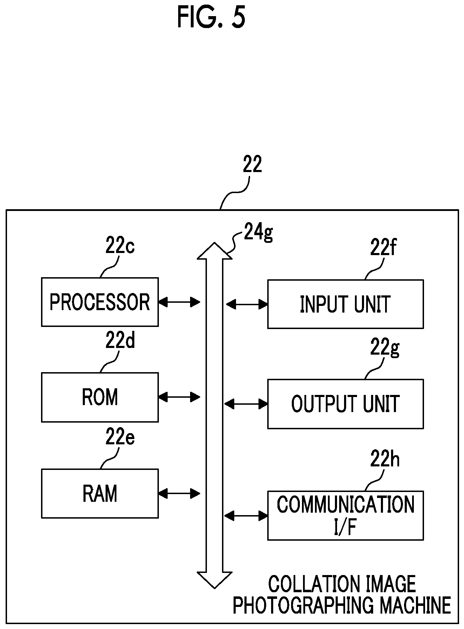

Fig. 5 shows a block diagram of a main configuration of a collation image photographing machine 22 such as a smartphone. The collation image photographing machine 22 includes a processor 22c, a ROM 22d, a RAM 22e, an input unit 22f, an output unit 22g, and a communication I/F 22h in addition to the light source unit 22a and the camera unit 22b described above.

The processor 22c reads out an application program stored in the ROM 22d, executes a series of processing by using the RAM 22e as a working memory, extracts the ink portion 14 from the photographed image photographed by the camera unit 22b, and further cuts out the collation image 18. The processor 22c transmits the cut-out collation image 18 to the server computer 50 via the communication I/F 22h. Further, the processor 22c receives the collation result from the server computer 50 via the communication I/F 22h.

The input unit 22f is composed of a keyboard, a touch switch, or the like, and the user operates the input unit 22f to start the application program.

The output unit 22g is composed of a liquid crystal display, an organic EL display, or the like, and displays a preview image in a case where the object 10 is photographed. Further, in a case where the ink portion 14 is extracted by the processor 22c, the output unit 22g may display a notification indicating that the ink portion 14 is extracted by a control command from the processor 22c. Further, the output unit 22g may display a guide in a case where photographing the object 10 by the control command from the processor 22c. The guide is, for example, a guide for making the irradiation angle of the irradiation light from the light source unit 22a a fixed angle $\varphi$. Further, the output unit 22g displays the collation result received from the server computer 50 by the control command from the processor 22c. The collation result is either "match" or "mismatch", but other messages related to the collation may be displayed.

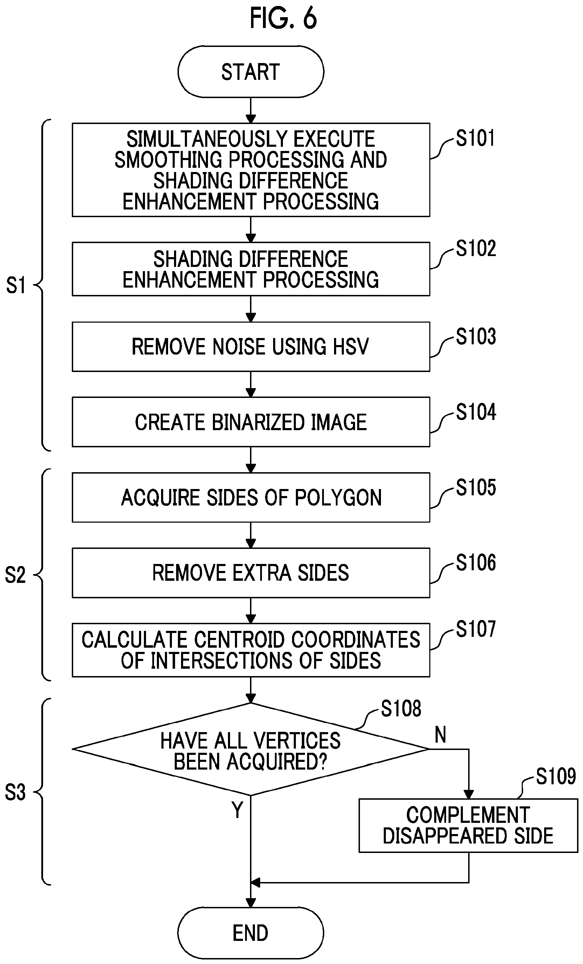

Fig. 6 is a processing flowchart of the photographed image by the processor 22c.

The purpose of the processing flowchart is to acquire coordinates of the four vertices P1 to P4 of the ink portion 14 of the square (quadrangle) from the photographed image, and the processing is substantially classified into three processing of binarized image generation processing (S1), rectangular edge extraction processing (S2), and vertex coordinate estimation processing (S3).

<Binarized image generation processing>

First, the binarized image generation processing (S1) will be described.

In the processing, first, smoothing processing and shading difference enhancement processing are simultaneously executed on the original image (S101). As described above, the shape of the ink portion 14 is blurred by simply performing the smoothing processing on the original image. Further, although the unevenness of the ink portion 14 is emphasized by simply performing the shading difference enhancement processing on the original image, the unevenness of the hologram portion 12 is also emphasized at the same time, so that the ink portion 14 cannot be extracted.

Therefore, in the present exemplary embodiment, the smoothing processing and the shading difference enhancement processing are simultaneously executed on the original image to remove the unevenness of the hologram portion 12 and the ink portion 14, and the ink portion 14 is identified from the hologram portion 12. Specifically, a mean-shift filter can be used for simultaneous execution of the smoothing processing and the shading difference enhancement processing.

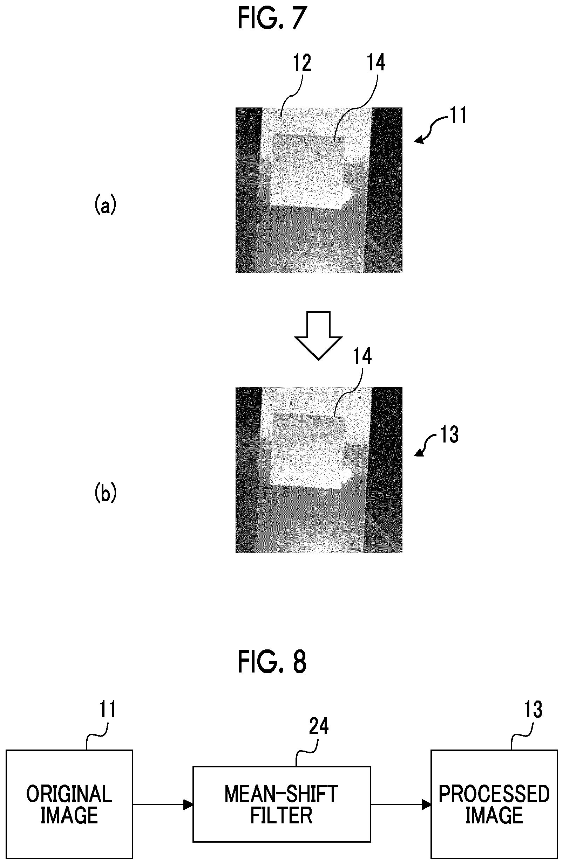

(a) of Fig. 7 shows an original image 11. The original image 11 includes the hologram portion 12 and the ink portion 14. (b) of Fig. 7 shows a processed image 13 processed by applying the mean-shift filter to the original image 11. By simultaneously executing the smoothing processing and the shading difference enhancement processing, the unevenness of the hologram portion 12 and the ink portion 14 can be removed, and the shape of the ink portion 14 can be maintained.

Fig. 8 schematically shows the processing of S101. The original image 11 is input to the mean-shift filter 24, and the smoothing processing and the shading difference enhancement processing are simultaneously executed by the mean-shift filter 24 to output the processed image 13. The mean-shift filter 24 is realized by the processor 22c. The mean-shift filter 24 is a filter that fills similar colors in a designated pixel space with the same color. As a result, the color of the silver ink portion 14 approaches the same color, and a boundary between a rainbow-colored background of the hologram portion 12 and the silver ink portion 14 has a different color area, so that the shading difference of the boundary between the hologram portion 12 and the ink portion 14 is emphasized while the shape of the ink portion 14 is maintained.

Note that although there is a filtering method that retains the edges and performs smoothing processing, such as a bilateral filter, the inventors have confirmed that the noise in the hologram portion 12 and the ink portion 14 cannot be removed by the method. By using the mean-shift filter, the edges are retained and smoothed for each color by using the color difference between the hologram portion 12 and the ink portion 14, and the noise can be removed without losing the edges.

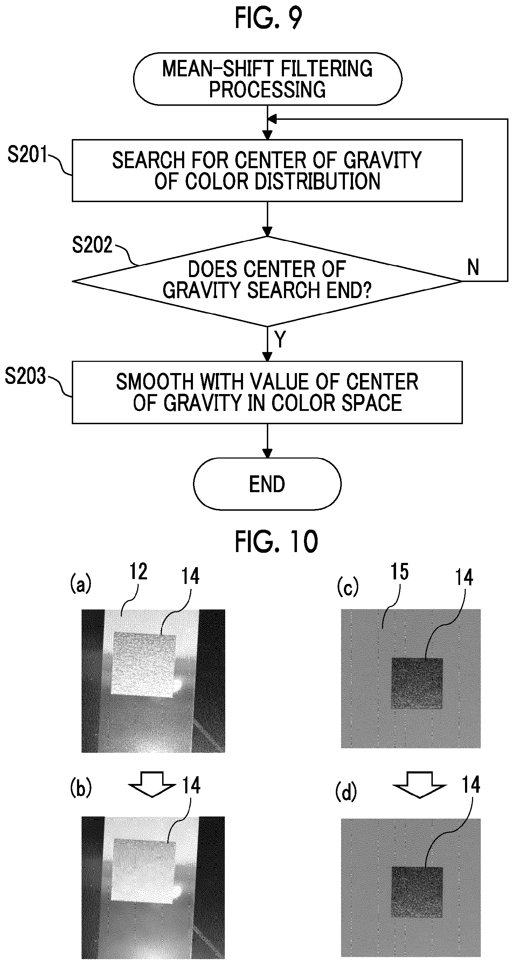

Fig. 9 shows a detailed flowchart of the filtering processing of the mean-shift filter 24. The mean-shift filter 24 first searches for the center of gravity of the color distribution of the original image 11 (S201). That is, centroid coordinates $(xc, yc)$ and the colors $(rc, gc, bc)$ of a color space area having a radius $sr$ centered on the colors $(r, g, b)$ of certain pixels $(x, y)$ are calculated and the center of gravity is searched under the following condition. Here, $sp$ is a radius of a search area.

Condition: $|x - xc| \leq sp$, $|y - yc| \leq sp$, $\| (r, g, b) - (rc, gc, bc) \| \leq sr$

Then, in a case where the above condition is satisfied,

by setting $(x, y, r, g, b) = (xg, yg, rc, gc, bc)$,
the center of gravity is searched again. The above center of gravity search processing is repeatedly executed (NO in S202).

Then, a color space distance $\varepsilon$ and the number of repetitions n are set in advance, it is determined whether or not the following condition is satisfied, and in a case where the condition is satisfied, the processing ends (YES in S202).

Condition: the number of repetitions n is satisfied, or

$$|x - xc| + |y - yc| + (r - rc)^2 + (g - gc)^2 + (b - bc)^2$$

$$< \varepsilon.$$

After the center of gravity search processing ends, smoothing is performed with the value of the center of gravity in the color space (S203). That is, after the polar search ends, each pixel in the space is set as a center of gravity value of the color space. The edges are then clarified by using the Gaussian pyramid and the threshold $sr$.

The mean-shift filter 24 performs the smoothing processing by using a distance difference in the color space, which is an effective smoothing processing in a case where there is a difference in the color space distance between the foreground and the background, and therefore, is an effective processing for the original image 11 in which an achromatic ink portion 14 exists in the foreground and a chromatic hologram portion 12 exists in the background.

In the mean-shift filter 24, the performance of the smoothing processing and the shading difference enhancement processing can be controlled by using a color space radius $sr$ and a pixel space radius $sp$ as major parameters. Therefore, by adjusting the parameters, a ratio of the smoothing processing and the shading difference enhancement processing can be adjusted. Specifically,

(1) since a search range of pixels smoothed (filled) by the pixel space radius $sp$ is designated,

in a case where sp is large $\rightarrow$ search range can be adjusted to be wide, and
in a case where sp is small $\rightarrow$ search range can be adjusted to be narrow.
Note that in a case where the sp is set too large, it takes a long time to processing, for example, so it is desirable to take this into consideration.

(2) Since the range of similar colors to be filled in the same color is determined by the color space radius $sr$,

in a case where sr is large $\rightarrow$ it can be adjusted so that even slightly different colors are recognized as the same color, and
in a case where sr is small $\rightarrow$ it can be adjusted so that similar colors are recognized as the same color.

Therefore, for example, it is desirable to adjust the values of the parameters sr and sp as follows depending on whether the printing substrate is the hologram portion 12 or other cases, for example, paper. In a case where the printing substrate is the hologram portion 12, since there is a color difference between the silver ink portion 14 and the rainbow-colored hologram portion 12, the color space radius sr is set relatively large, and the pixel space radius sp is set to a desired value in consideration of the processing time and the effect. In a case where the printing substrate is paper, since the color difference between the silver ink portion 14 and the paper is small, the color space radius sr is set relatively small and the pixel space radius sp is set relatively small.

Fig. 10 shows filtering processing results of the mean-shift filter 24 in a case where the printing substrate is the hologram portion 12 and paper 15.

(a) and (b) of Fig. 10 show a case where the printing substrate is the hologram portion 12, where (a) of Fig. 10 is an original image, and (b) of Fig. 10 is a processed image. The parameters sp and sr of the mean-shift filter 24 are set to

(sp, sr) = (10, 30), and
the shape of the ink portion 14 is extracted.

On the other hand, (c) and (d) of Fig. 10 show a case where the printing substrate is the paper 15, where (c) of Fig. 10 is an original image, and (d) of Fig. 10 is a processed image. The parameters sp and sr of the mean-shift filter 24 are set to

(sp, sr) = (5, 10) and,
similarly, the shape of the ink portion 14 is extracted. In a case where the printing substrate is the paper 15, both sp and sr are set to be relatively small as compared with the case where the printing substrate is the hologram portion 12. In other words, in a case where the printing substrate is the hologram portion 12, both sp and sr are set relatively large as compared with the case where the printing substrate is the paper 15, and two parameters sp and sr are variably set in accordance with the printing substrate.

As described above, the processor 22c simultaneously executes the smoothing processing and the shading difference enhancement processing on the original image photographed with the mean-shift filter 24.

Referring back to Fig. 6, after the smoothing processing and the shading difference enhancement processing are simultaneously executed on the original image (S101), an additional shading difference enhancement processing is further executed for a portion where the shading difference cannot be obtained by the processing of S101 (S102).

In a case where the ink portion 14 is photographed by the collation image photographing machine 22 such as a smartphone, the color of the hologram portion 12 around the ink portion 14 changes in a case where an irradiation position of the light source unit 22a changes. That is, in a case where the color of the hologram portion 12 changes and there is no sufficient difference in the color space distance from the ink portion 14, the foreground and the background are assimilated, and there may be portions where the shading difference enhancement is insufficient only by the processing of S101. Therefore, by further executing the shading difference enhancement processing, the shape of the ink portion 14 is extracted more stably.

Specifically, the processed image 13 in S101 is decomposed into RGB, and the shading difference enhancement processing is executed in each RGB color space. This means flattening of an in-image brightness histogram. Then, in order to extract an edge gradient, a Sobel filter for each of the vertical and horizontal directions is applied to each RGB color image. Note that since a gradient value calculated by the Sobel filter is not eight bits (256 gradations), this may be normalized to eight bits. The normalization method is processing of taking an absolute value of a gradient image and replacing all the pixel values of 255 or more with 255. As a result, the edge gradient can be acquired independently of disturbance noise.

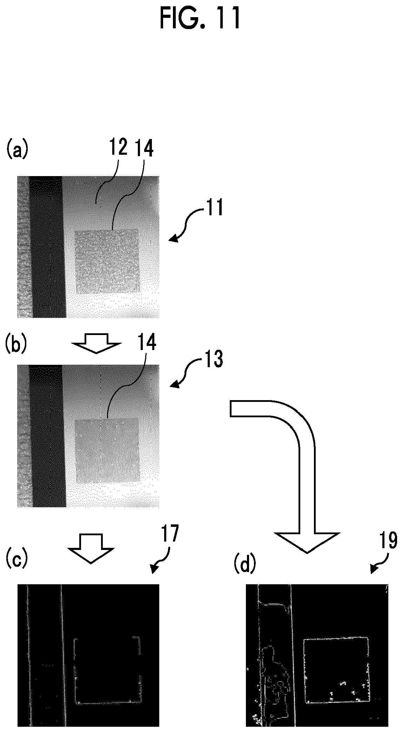

Fig. 11 schematically shows the processing of S102. (a) of Fig. 11 shows the original image 11, and (b) of Fig. 11 shows the processed image 13 of S101. (c) of Fig. 11 is an image 17 obtained by binarizing the processed image of (b) of Fig. 11 as it is, and an upper side of the square ink portion 14 has disappeared. On the other hand, (d) of Fig. 11 is an image 19 obtained by binarizing the processed image 13 of (b) of Fig. 11 further subjected to the shading difference enhancement processing. The upper side of the square ink portion 14 is also extracted.

Referring back to Fig. 6, after executing additional shading difference enhancement processing (S102), noise removal processing using an HSV color space is executed (S103). Here, the HSV color space is a color space composed of three components of Hue, Saturation/Chroma, and Value/Brightness.

In a case where a rough shape of the ink portion 14 is extracted in S102, noise is generated at a boundary between the white color and the light blue color of the hologram portion 12. In particular, since the gradients of the white color and the light blue color in an R space image are large, noise such as an edge is generated in a case where the Sobel filter is applied. Therefore, the noise is removed by using the HSV color space. Specifically, (1) the processed image 13 in S101 is HSV decomposed (2) S image is binarized (3) vertical and horizontal Sobel filter is applied to S binary image (4) black-and-white inverted binary image of vertical and horizontal Sobel image and H image are OR-synthesized.

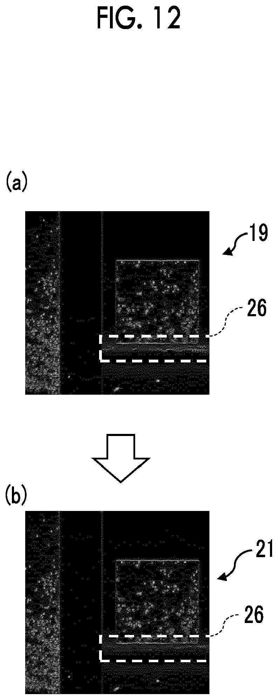

Fig. 12 schematically shows the processing of S103. (a) of Fig. 12 shows the noise generated at the boundary between the white color and the light blue color in the image 19 in a broken line area 26. (b) of Fig. 12 shows a processed image 21 in S103. The image 21 is an OR synthesized image of the black-and-white inverted binary image of the vertical and horizontal Sobel image and the H image, and the noise in the broken line area 26 is removed.

Referring back to Fig. 6, after executing the processing of S103, a binarized image is created (S104). That is, a total of 6 vertical and horizontal gradient images of the R, G, and B images are respectively binarized. A binarization threshold may be set differently for each of R, G, and B. Then, a total of six binarized images of vertical and horizontal components and RGB color components are OR-synthesized.

<Rectangular edge extraction processing>

Next, the rectangular edge extraction processing will be described.

After creating the binarized image in S104, the sides of the polygon constituting the square ink portion 14 are acquired from the binarized image (S105). Specifically, this is edge extraction processing using a stochastic Hough transform. Note that the stochastic Hough transform is an optimization of the Hough transform, and instead of calculating using all the pixels, points sufficient for straight line detection are randomly selected from the image and calculated. A (non-stochastic) Hough transform can also be used in S104. However, parameter tuning is difficult, and there is a drawback that the sensitivity is too good for the rectangular edges of the binarized image.

After acquiring the sides of the polygon (S105), the processing of removing extra sides is executed (S106). That is, straight lines that are not rectangular edges (sides) are removed from the straight lines extracted by the stochastic Hough transform. Specifically, a method of removing a straight line having an inclination of a fixed value or more, and a long straight line with respect to the size of the collation area 14, removing a straight line of which an angle in which vertical and horizontal lines intersect within a fixed angle, or removing a straight line in contact with an image frame and the like is used. In addition to this, extra sides may be removed by extracting edges with a rectangular hue by using a color space.

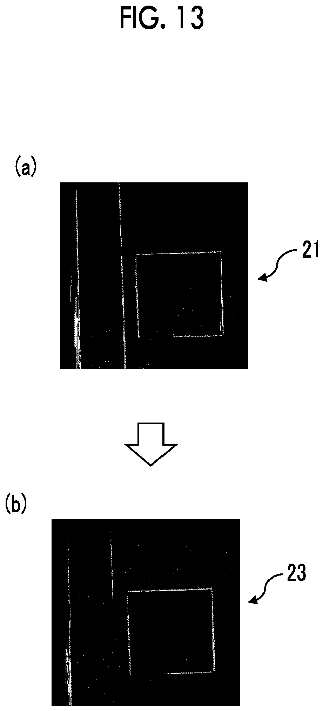

Fig. 13 schematically shows the processing of S106. (a) of Fig. 13 is the image 21 before processing, and (b) of Fig. 13 is a processed image 23. A part of the straight line existing on a left side of the image 21 has been removed. By removing the extra side, it is possible to reduce the processing time in a case where estimating the vertex coordinates in the subsequent stage. In addition, the shape acquisition accuracy may be improved and the disturbance durability may be also improved.

<Vertex coordinate estimation processing>

Referring back to Fig. 6, after the rectangular edge extraction processing (S2) is completed, the vertex coordinate estimation processing (S3) of the square ink portion 14 is executed.

In the processing, the centroid coordinates of the intersections of the sides are calculated from the image obtained by removing the extra sides in S106 (S107). That is, instead of the intersections consisting of each side, the centroid coordinates of an intersection group within a certain vicinity are calculated. Although the intersections of vertical and horizontal straight lines are calculated for the processed image 23 by addressing a one-dimensional simultaneous equation, since an edge width of the binarized image after OR synthesis is two to three pixels, a plurality of straight lines are extracted for the same edge by the stochastic Hough transform. Therefore, there are a plurality of intersections in the vicinity of certain coordinates. Since these intersections are likely to indicate the same vertex, the centroid coordinates of the intersection group are acquired, and the centroid coordinates are redefined as the vertices of the shape of the ink portion 14.

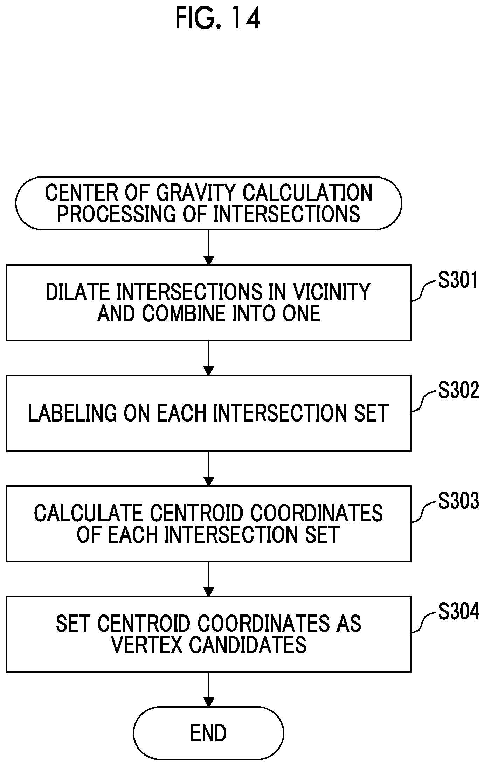

Fig. 14 shows a detailed flowchart of centroid coordinate calculation processing of the intersection group.

First, a plurality of intersections in a certain vicinity are dilated and combined into one (S301). The dilation processing is processing in which in a case where there is a white pixel in peripheral pixels of a certain pixel, the pixel is converted into the white pixel thereby sequentially expanding the white pixel. Next, labeling is performed on each intersection set that has been dilated (S302). Then, the centroid coordinates of each labeled intersection set are calculated (S303). In a case where the centroid coordinates are calculated as described above, the calculated centroid coordinates are set as the vertex candidates (S304).

Since the square ink portion 14 has four vertices P1 to P4 (refer to Fig. 2), four vertex candidates are set in the processing of S304. In a case where setting the vertex candidates, known shape characteristics of the ink portion 14, that is, the lengths of the sides and diagonal lines can be used as the condition. In a case where there are a plurality of pairs of vertices that satisfy the condition, a plausible pair of vertices is selected. For example, in the square ink portion 14, the condition that the lengths of the four sides are equal to each other is used, and the pair having the smallest dispersion of the side lengths is set as the pair of vertices.

Then, it is determined whether or not all the vertices of the ink portion 14 have been acquired (S108). In the square ink portion 14, it is determined that all the vertices have been acquired in a case where the four vertices P1 to P4 are acquired. In a case where all the vertices have not been acquired (NO in S108), it means that all the sides of the ink portion 14 have not been extracted, so the complementary processing of the disappeared side is executed next (S109).

In the complementary processing of the side, it is determined whether or not three sides constituting the square have been extracted from the square ink portion 14. Normally, in a case where the ink portion 14 is printed on the hologram portion 12 as a printing substrate, in a case where the red of background of the hologram portion 12 is covered with the red of the foreground, extraction of the sides may fail. In short, it is a case where a color space distance difference between the background and the foreground is small. Therefore, it is first determined whether or not the three sides have been extracted. The selection of the three sides can be estimated from the known shape characteristics of the ink portion 14, that is, the length or the position of the edges.

In a case where the three sides are extracted, a length x of the side having no opposite side among the three sides is calculated from the centroid coordinates calculated in S107. Then, a new parallel side is drawn at a portion separated by the length x of the side. Specifically, it is assumed that the four sides constituting the square are a, b, c, and d, a and c are opposite sides, and b and d are opposite sides, and in a case where only three sides of a, b, and c are extracted, a side parallel to b is drawn at a position separated by x from b to be d.

As parallel sides separated by x from b, it is possible to estimate a total of two, one on each of the both sides of b, and since one of the sides does not exist in the image, the side d can be uniquely drawn. This complements the disappeared sides.

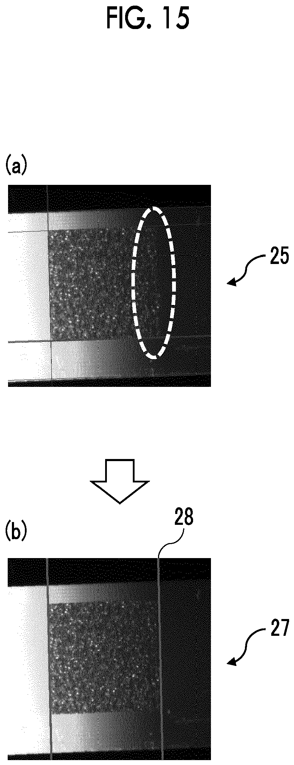

Fig. 15 schematically shows the processing of S109. (a) of Fig. 15 is an image 25 before processing, and shows a state in which three sides of the square have been extracted and the remaining one side has disappeared. (b) of Fig. 15 is an image 27 after processing, in which a new parallel side 28 is drawn at a portion separated by the length x of the side. After the complementary processing of the disappeared side, the centroid coordinates of the intersection may be calculated again to acquire the coordinates of all the vertices.

Note that after the complementary processing of the disappeared sides, the threshold may be lowered for the binarized image obtained in S104, and the stochastic Hough transform may be executed again to reacquire the side, and the side obtained in this way and the side obtained by complementing in S109 may be integrated, and the processing may be transferred to the vertex coordinate estimation processing (S3) again.

In a case where the coordinates of the four vertices P1 to P4 of the ink portion 14 are acquired as described above, the processor 22c cuts out the collation image 18 with reference to the coordinates of these four vertices and transmits the collation image 18 to the server computer 50. The processor 22c converts the resolution into a predetermined size and then transmits the image to the server computer 50, as the collation image 18. in a case where transmitting to the server computer 50, a collation request is made by attaching the collation image 18 of which the resolution has been converted.

In the present exemplary embodiment, the square ink portion 14 has been described as an example, but the present exemplary embodiment is not limited to the square, and can be applied to any polygon.

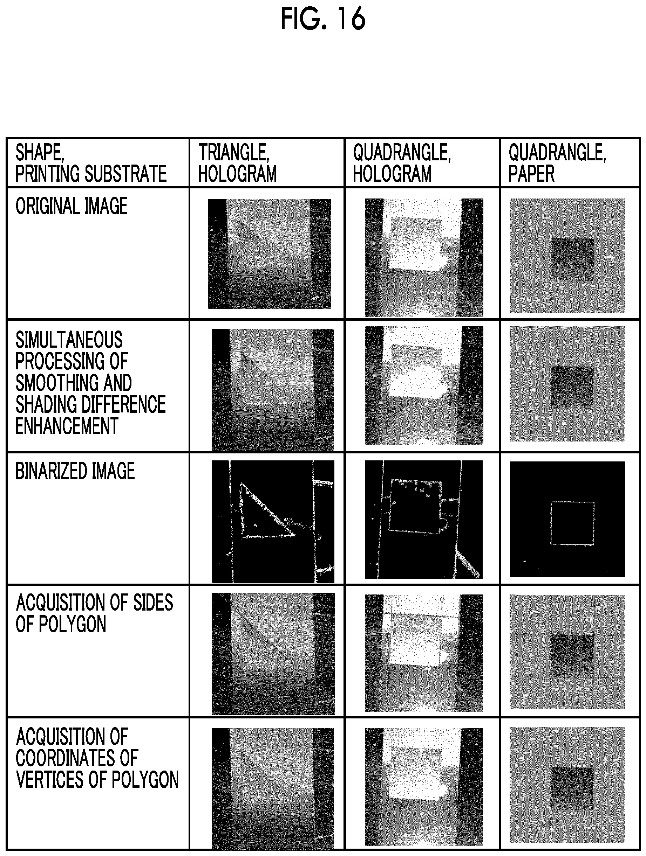

Fig. 16 shows images after each processing in a case where the hologram portion 12 and the paper 15 are used as the printing substrates and the triangles and the quadrangles (squares) are used as the shapes of the ink portions 14. In Fig. 16, (triangle, hologram) shows that the hologram portion 12 is used as the printing substrate and a triangular ink portion 14 is used as the ink portion 14. Similarly, (quadrangle, hologram) shows that the hologram portion 12 is used as the printing substrate, and a quadrangle (square) ink portion 14 is used as the ink portion 14. (Quadrangle, paper) shows that the paper 15 is used as the printing substrate and the quadrangle (square) ink portion 14 is used as the ink portion 14. Further, the "original image" is the photographed image before processing, the "simultaneous processing of smoothing and shading difference enhancement" is the image after processing of S101 in Fig. 6, the "binarized image" is the image after the processing of S104 in Fig. 6, the "acquisition of sides of polygon" is the image after the processing of S105 in Fig. 6, and the "acquisition of the coordinates of the vertices of polygon" is the image after the processing of S108 in Fig. 6.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed.

Further, in the present exemplary embodiment, although the processor 22c of the collation image photographing machine 22 such as a smartphone executes the processing shown in Fig. 6, instead of this, the collation unit 50a of the server computer 50 may execute at least a part of the processing shown in Fig. 6.

Further, in the present exemplary embodiment, although a case where the ink portion 14 is printed on the hologram portion 12 as the printing substrate, that is, a combination of the chromatic background and the achromatic foreground has been described, on the contrary, the processing of the present exemplary embodiment can be applied to a combination of the achromatic background and the chromatic foreground. A basic principle of the mean-shift filter 24 is to extract the shape of the foreground by using the color space distance difference between the achromatic color and the chromatic color, and the principle can be applied to a combination of the achromatic background and the chromatic foreground as well. As the combination of the achromatic background and the chromatic foreground, for example, there is a combination of the paper 15 as the printing substrate and the chromatic ink portion 14.

Further, in the present exemplary embodiment, in a case where the color space distance difference between the hologram portion 12 and the ink portion 14 is relatively small and the mean-shift filter 24 cannot sufficiently extract the shape of the ink portion 14, a known Canny method may be used in a complementary manner.

That is, the edge obtained by the stochastic Hough transform is masked for the binarized image obtained in S104.

Next, assuming that the straight line on the blue side has been extracted, the half of the blue side of the image is masked. This utilizes a fact that the mean-shift filtering is robust to the blue side and vulnerable to the red side, and the Canny method is vulnerable to the blue side and robust to the red side.

Next, the edge is extracted by the Canny method. Since the edge extracted by the Canny method is drawn with one pixel, a straight line may not be formed by the stochastic Hough transform, so the edge extracted by the Canny method is dilated. As a result, the edge of about three pixels is extracted, and the edge can be extracted even by stochastic Hough transform.

The followings are examples of methods that can be complementarily used in a case where the shape extraction by the mean-shift filter 24 is not sufficient.

- Using image contrast enhancement.
Lowering the thresholds of binarization and stochastic Hough transform.
· Extracting edges by using Canny method.
· Complementing the disappearing side by using a known shape of the ink portion 14.

Any one of these methods, or a plurality of these methods can be used in combination. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

Brief Description of the Reference Symbols

10: object
12: hologram portion
14: ink portion
16: registered image
18: collation image
20: registered image photographing machine
22: collation image photographing machine
50: server computer

**Claims**

1. A collation device (22) comprising:
a processor (22c) configured to, by executing a program:
acquire a photographed image including a collation area provided on a printing substrate having unevenness; the collation device being **characterized in that** the processor is further configured to:

simultaneously execute (S101) smoothing processing and shading difference enhancement processing on the photographed image by mean-shift filtering processing with variably setting a color space radius (sr) and a pixel space radius (sp) in the mean-shift filtering processing in accordance with the printing substrate to obtain a smoothed and enhanced image;
execute (S104) binarization processing on the smoothed and enhanced image to generate a binarized image;
remove (S106) extra sides that do not match a predetermined shape of the collation area as noise from the binarized image to generate a side-removed image;

calculate (S107) centroid coordinates of a plurality of intersections, which are candidates for vertices constituting the predetermined shape of the collation area, from the side-removed image; and
extract a collation image from the collation area included in the photographed image with reference to the centroid coordinates of the plurality of intersections.

2. The collation device (22) according to claim 1, wherein the processor (22c) is configured to:
adjust a ratio of the smoothing processing and the shading difference enhancement processing on the photographed image in accordance with the printing substrate.

3. The collation device (22) according to any one of claims 1 to 2, wherein the processor (22c) is configured to:
remove straight lines or curves existing at specific boundaries in an HSV color space as noise from the smoothed and enhanced image.

4. The collation device (22) according to any one of claims 1 to 3, wherein the processor (22c) is configured to:
remove straight lines or curves that do not match the predetermined shape of the collation area as noise from the image obtained by the binarization processing.

5. The collation device (22) according to claim 1, wherein the processor (22c) is configured to:
perform complementary processing of coordinates of remaining vertices by using the shape of the collation area, in a case where coordinates of all the vertices constituting the shape of the collation area are not calculated.

6. The collation device (22) according to any one of claims 1 to 5,
wherein the printing substrate is paper or a hologram.

7. The collation device according to claim 1, wherein the processor is configured to:
set the color space radius sr relatively large in a case where the printing substrate is a hologram, as compared with a case where the printing substrate is paper.

8. A program causing a computer processor (22c) to execute a process comprising:

acquiring a photographed image including a collation area provided on a printing substrate having unevenness;
simultaneously executing (S101) smoothing processing and shading difference enhancement processing on the photographed image by mean-shift filtering processing with variably setting a color space radius (sr) and a pixel space radius (sp) in the mean-shift filtering processing in accordance with the printing substrate to obtain a smoothed and enhanced image;
executing (S104) binarization processing on the smoothed and enhanced image to generate a binarized image;
removing (S106) extra sides that do not match a predetermined shape of the collation area as noise from the binarized image to generate a side-removed image;
calculating (S107) centroid coordinates of a plurality of intersections, which are candidates for vertices constituting the predetermined shape of the collation area, from the side-removed image; and
extracting a collation image from the collation area included in the photographed image with reference to the centroid coordinates of the plurality of intersections.

9. A collation method comprising:

acquiring a photographed image including a collation area provided on a printing substrate having unevenness;
simultaneously executing (S101) smoothing processing and shading difference enhancement processing on the photographed image by mean-shift filtering processing with variably setting a color space radius (sr) and a pixel space radius (sp) in the mean-shift filtering processing in accordance with the printing substrate to obtain a smoothed and enhanced image;
executing (S104) binarization processing on the smoothed and enhanced image to generate a binarized image;
removing (S106) extra sides that do not match a predetermined shape of the collation area as noise from the binarized image to generate a side-removed image;
calculating (S107) centroid coordinates of a plurality of intersections, which are candidates for vertices constituting the predetermined shape of the collation area, from the side-removed image; and
extracting a collation image from the collation area included in the photographed image with reference to the centroid coordinates of the plurality of intersections.

**Patentansprüche**

1. Abgleichvorrichtung (22), umfassend:
einen Prozessor (22c), der durch Ausführen eines Programms konfiguriert ist zum:
Erfassen eines fotografierten Bildes, einschließlich eines Abgleichbereichs, bereitgestellt auf einem Drucksubstrat mit Unebenheiten; wobei die Abgleichvorrichtung **dadurch gekennzeichnet ist, dass** der Prozessor ferner konfiguriert ist zum:

    gleichzeitigen Ausführen (S101) einer Glättungsverarbeitung und einer Schattierungsdifferenzverbesserungsverarbeitung an dem fotografierten Bild durch eine Mittelwertverschiebungsfilterungsverarbeitung mit variabler Einstellung eines Farbraumradius (sr) und eines Pixelraumradius (sp) in der Mittelwertverschiebungsfilterungsverarbeitung in Übereinstimmung mit dem Drucksubstrat, um ein geglättetes und verbessertes Bild zu erhalten;
    Ausführen (S104) einer Binarisierungsverarbeitung an dem geglätteten und verbesserten Bild, um ein binarisiertes Bild zu erzeugen;
    Entfernen (S106) von zusätzlichen Seiten, die nicht mit einer vorbestimmten Form des Abgleichbereichs übereinstimmen, als Rauschen aus dem binarisierten Bild, um ein seitenentferntes Bild zu erzeugen;
    Berechnen (S107) von Schwerpunktkoordinaten einer Vielzahl von Schnittpunkten, die Kandidaten für Scheitelpunkte sind, die die vorbestimmte Form des Abgleichbereichs bilden, aus dem seitenentfernten Bild, und Extrahieren eines Abgleichbildes aus dem Abgleichbereich, enthalten in dem fotografierten Bild, unter Bezugnahme auf die Schwerpunktkoordinaten der Vielzahl von Kreuzungspunkten.

2. Abgleichvorrichtung (22) gemäß Anspruch 1, wobei der Prozessor (22c) konfiguriert ist zum:
Einstellen eines Verhältnisses der Glättungsverarbeitung und der Schattierungsdifferenzverbesserungsverarbeitung auf dem fotografierten Bild in Übereinstimmung mit dem Drucksubstrat.

3. Abgleichvorrichtung (22) gemäß irgendeinem der Ansprüche 1 bis 2, wobei der Prozessor (22c) konfiguriert ist zum:
Entfernen gerader Linien oder Kurven, die an bestimmten Grenzen in einem HSV-Farbraum existieren, als Rauschen aus dem geglätteten und verbesserten Bild.

4. Abgleichvorrichtung (22) gemäß irgendeinem der Ansprüche 1 bis 3, wobei der Prozessor (22c) so konfiguriert ist zum:
Entfernen von geraden Linien oder Kurven, die nicht mit der vorbestimmten Form des Abgleichbereichs übereinstimmen, als Rauschen aus dem durch die Binarisierungsverarbeitung erhaltenen Bild.

5. Abgleichvorrichtung (22) gemäß Anspruch 1, wobei der Prozessor (22c) konfiguriert ist zum:
Durchführen einer ergänzenden Verarbeitung von Koordinaten der verbleibenden Scheitelpunkte unter Verwendung der Form des Abgleichbereichs in einem Fall, in dem die Koordinaten aller Scheitelpunkte, die die Form des Abgleichbereichs bilden, nicht berechnet werden.

6. Abgleichvorrichtung (22) gemäß irgendeinem der Ansprüche 1 bis 5,
wobei das Drucksubstrat Papier oder ein Hologramm ist.

7. Abgleichvorrichtung (22) gemäß Anspruch 1, wobei der Prozessor konfiguriert ist zum:
Einstellen des Farbraumradius sr zu relativ groß in einem Fall, in dem das Drucksubstrat ein Hologramm ist, im Vergleich zu einem Fall, in dem das Drucksubstrat Papier ist.

8. Programm, das einen Computerprozessor (22c) veranlasst, einen Prozess auszuführen, umfassend:

    Erfassen eines fotografierten Bildes, enthaltend einen Abgleichbereich, bereitgestellt auf einem Drucksubstrat mit Unebenheiten;
    gleichzeitiges Ausführen (S101) einer Glättungsverarbeitung und einer Schattierungsdifferenzverbesserungsverarbeitung an dem fotografierten Bild durch eine Mittelwertverschiebungsfilterungsverarbeitung mit variabler Einstellung eines Farbraumradius (sr) und eines Pixelraumradius (sp) in der Mittelwertverschiebungsfilterungsverarbeitung in Übereinstimmung mit dem Drucksubstrat, um ein geglättetes und verbessertes Bild zu erhalten;
    Ausführen (S104) einer Binarisierungsverarbeitung an dem geglätteten und verbesserten Bild, um ein binarisiertes Bild zu erzeugen;
    Entfernen (S106) von zusätzlichen Seiten, die nicht mit einer vorbestimmten Form des Abgleichbereichs übereinstimmen, als Rauschen aus dem binarisierten Bild, um ein seitenentferntes Bild zu erzeugen;

Berechnen (S107) von Schwerpunktkoordinaten einer Vielzahl von Schnittpunkten, die Kandidaten für Scheitelpunkte sind, die die vorbestimmte Form des Abgleichbereichs bilden, aus dem seitenentfernten Bild; und Extrahieren eines Abgleichbildes aus dem Abgleichbereich, enthalten in dem fotografierten Bild, unter Bezugnahme auf die Schwerpunktkoordinaten der Vielzahl von Schnittpunkten.

9.  Abgleichverfahren, umfassend:

Erfassen eines fotografierten Bildes, enthaltend einen Abgleichbereich, bereitgestellt auf einem Drucksubstrat mit Unebenheiten;
gleichzeitiges Ausführen (S101) einer Glättungsverarbeitung und einer Schattierungsdifferenzverbesserungsverarbeitung an dem fotografierten Bild durch eine Mittelwertverschiebungsfilterungsverarbeitung mit variabler Einstellung eines Farbraumradius (sr) und eines Pixelraumradius (sp) in der Mittelwertverschiebungsfilterungsverarbeitung in Übereinstimmung mit dem Drucksubstrat, um ein geglättetes und verbessertes Bild zu erhalten;
Ausführen (S104) einer Binarisierungsverarbeitung an dem geglätteten und verbesserten Bild, um ein binarisiertes Bild zu erzeugen;
Entfernen (S106) von zusätzlichen Seiten, die nicht mit einer vorbestimmten Form des Abgleichbereichs übereinstimmen, als Rauschen aus dem binarisierten Bild, um ein seitenentferntes Bild zu erzeugen;
Berechnen (S107) von Schwerpunktkoordinaten einer Vielzahl von Schnittpunkten, die Kandidaten für Scheitelpunkte sind, die die vorbestimmte Form des Abgleichbereichs bilden, aus dem seitenentfernten Bild; und
Extrahieren eines Abgleichbildes aus dem Abgleichbereich, enthalten in dem fotografierten Bild, unter Bezugnahme auf die Schwerpunktkoordinaten der Vielzahl von Schnittpunkten.

## Revendications

1.  Un dispositif de collationnement (22) comprenant :
un processeur (22c) configuré pour, en exécutant un programme :
acquérir une image photographiée comprenant une zone de collationnement prévue sur un substrat d'impression présentant des irrégularités ; le dispositif de collationnement étant **caractérisé en ce que** le processeur est en outre configuré pour :

exécuter simultanément (S101) un traitement de lissage et un traitement d'amélioration de la différence d'ombrage sur l'image photographiée par un traitement de filtrage par décalage moyen avec un réglage variable d'un rayon d'espace colorimétrique (sr) et d'un rayon d'espace de pixel (sp) dans le traitement de filtrage par décalage moyen en fonction du substrat d'impression, afin d'obtenir une image lissée et améliorée ;
exécuter (S104) un traitement de binarisation sur l'image lissée et améliorée pour générer une image binarisée ;
supprimer (S106) les côtés supplémentaires qui ne correspondent pas à une forme prédéterminée de la zone de collationnement en tant que bruit de l'image binarisée, afin de générer une image à côtés supprimés ;
calculer (S107) les coordonnées centroïdes d'une pluralité d'intersections, qui sont des candidats pour les sommets constituant la forme prédéterminée de la zone de collation, à partir de l'image à côtés supprimés ; et
extraire une image de collationnement de la zone de collationnement incluse dans l'image photographiée en référence aux coordonnées centroïdes de la pluralité d'intersections.

2.  Le dispositif de collationnement (22) selon la revendication 1, dans lequel le processeur (22c) est configuré pour :
ajuster un rapport du traitement de lissage et du traitement d'amélioration de différence d'ombrage sur l'image photographiée conformément au substrat d'impression.

3.  Le dispositif de collationnement (22) selon l'une quelconque des revendications 1 à 2, dans lequel le processeur (22c) est configuré pour :
supprimer les lignes droites ou les courbes existant à des limites spécifiques dans un espace colorimétrique HSV en tant que bruit de l'image lissée et améliorée.

4.  Le dispositif de collationnement (22) selon l'une quelconque des revendications 1 à 3, dans lequel le processeur (22c) est configuré pour :
supprimer les lignes droites ou les courbes qui ne correspondent pas à la forme prédéterminée de la zone de collationnement en tant que bruit de l'image obtenue par le traitement de binarisation.

5.  Le dispositif de collationnement (22) selon la revendication 1, dans lequel le processeur (22c) est configuré pour :

**EP 4 156 120 B1**

effectuer un traitement complémentaire des coordonnées des sommets restants en utilisant la forme de la zone de collationnement, dans un cas où les coordonnées de tous les sommets constituant la forme de la zone de collationnement ne sont pas calculées.

6. Le dispositif de collationnement (22) selon l'une quelconque des revendications 1 à 5,
   dans lequel le substrat d'impression est du papier ou un hologramme.

7. Le dispositif de collationnement selon la revendication 1, dans lequel le processeur est configuré pour :
   fixer le rayon d'espace couleur sr relativement grand dans un cas où le substrat d'impression est un hologramme, par rapport à un cas où le substrat d'impression est du papier.

8. Un programme amenant un processeur informatique (22c) à mettre en œuvre un procédé comprenant :

   le fait d'acquérir une image photographiée comprenant une zone de collationnement prévue sur un substrat d'impression présentant des irrégularités ;
   le fait d'exécuter simultanément (S101) un traitement de lissage et un traitement d'amélioration de la différence d'ombrage sur l'image photographiée par un traitement de filtrage par décalage moyen avec un réglage variable d'un rayon d'espace colorimétrique (sr) et d'un rayon d'espace de pixel (sp) dans le traitement de filtrage par décalage moyen conformément au substrat d'impression pour obtenir une image lissée et améliorée ;
   le fait (S104) d'exécuter un traitement de binarisation sur l'image lissée et améliorée pour générer une image binarisée ;
   le fait (S106) de supprimer des côtés supplémentaires qui ne correspondent pas à une forme prédéterminée de la zone de collationnement en tant que bruit de l'image binarisée, afin de générer une image à côtés supprimés ;
   le fait (S107) de calculer les coordonnées centroïdes d'une pluralité d'intersections, qui sont des candidats pour les sommets constituant la forme prédéterminée de la zone de collation, à partir de l'image à côtés supprimés ; et
   le fait d'extraire une image de collationnement de la zone de collationnement incluse dans l'image photographiée en référence aux coordonnées centroïdes de la pluralité d'intersections.

9. Un procédé de collation comprenant :

   le fait d'acquérir une image photographiée comportant une zone de collationnement prévue sur un support d'impression présentant des irrégularités ;
   le fait (S101) d'exécuter simultanément un traitement de lissage et un traitement d'amélioration de la différence d'ombrage sur l'image photographiée par un traitement de filtrage à décalage moyen avec un réglage variable d'un rayon d'espace de couleur (sr) et d'un rayon d'espace de pixel (sp) dans le traitement de filtrage à décalage moyen en fonction du support d'impression, afin d'obtenir une image lissée et améliorée ;
   le fait (S104) d'exécuter un traitement de binarisation sur l'image lissée et améliorée pour générer une image binarisée ;
   le fait (S106) de supprimer des côtés supplémentaires qui ne correspondent pas à une forme prédéterminée de la zone de collation en tant que bruit de l'image binarisée, afin de générer une image à côtés supprimés ;
   le fait (S107) de calculer des coordonnées centroïdes d'une pluralité d'intersections, qui sont candidates pour des sommets constituant la forme prédéterminée de la zone de collationnement, à partir de l'image supprimée latéralement ; et
   le fait d'extraire une image de collationnement à partir de la zone de collationnement incluse dans l'image photographiée en référence aux coordonnées centroïdes de la pluralité d'intersections.

15

# FIG. 1

# FIG. 2

# FIG. 3

# FIG. 4

REGISTERED IMAGE

20

21

φ

14

50

50a    50b

COLLATION
UNIT    DB

22    22a    22b

COLLATION IMAGE
COLLATION RESULT

φ

14

# FIG. 5

22

24g

22c **PROCESSOR**

22d **ROM**

22e **RAM**

22f **INPUT UNIT**

22g **OUTPUT UNIT**

22h **COMMUNICATION I/F**

COLLATION IMAGE
PHOTOGRAPHING MACHINE

# FIG. 6

START

SIMULTANEOUSLY EXECUTE SMOOTHING PROCESSING AND SHADING DIFFERENCE ENHANCEMENT PROCESSING — S101

SHADING DIFFERENCE ENHANCEMENT PROCESSING — S102

REMOVE NOISE USING HSV — S103

CREATE BINARIZED IMAGE — S104

S1

ACQUIRE SIDES OF POLYGON — S105

REMOVE EXTRA SIDES — S106

CALCULATE CENTROID COORDINATES OF INTERSECTIONS OF SIDES — S107

S2

S108
HAVE ALL VERTICES BEEN ACQUIRED?

N

S109
COMPLEMENT DISAPPEARED SIDE

Y

S3

END

20

# FIG. 7

(a)

(b)

# FIG. 8

| ORIGINAL IMAGE | → | MEAN-SHIFT FILTER | → | PROCESSED IMAGE |
|---|---|---|---|---|

## FIG. 9

```
                    MEAN-SHIFT FILTERING
                        PROCESSING
                            │
                            ▼
S201          SEARCH FOR CENTER OF GRAVITY
                  OF COLOR DISTRIBUTION
                            │
                            ▼
S202                 DOES CENTER OF                    N
               GRAVITY SEARCH END?
                            │ Y
                            ▼
S203         SMOOTH WITH VALUE OF CENTER
                OF GRAVITY IN COLOR SPACE
                            │
                            ▼
                          END
```

## FIG. 10

(a)  12  14

(c)  15  14

(b)  ⬇ 14

(d)  ⬇ 14

# FIG. 11

(a)

(b)

(c)

(d)

# FIG. 12

(a)

(b)

# FIG. 13

(a)

21

(b)

23

# FIG. 14

```
┌─────────────────────────────────────┐
│  CENTER OF GRAVITY CALCULATION       │
│  PROCESSING OF INTERSECTIONS         │
└─────────────────────────────────────┘
                    │
                    ▼
┌─────────────────────────────────────┐
│  DILATE INTERSECTIONS IN VICINITY    │───S301
│  AND COMBINE INTO ONE                │
└─────────────────────────────────────┘
                    │
                    ▼
┌─────────────────────────────────────┐
│  LABELING ON EACH INTERSECTION SET   │───S302
└─────────────────────────────────────┘
                    │
                    ▼
┌─────────────────────────────────────┐
│  CALCULATE CENTROID COORDINATES      │───S303
│  OF EACH INTERSECTION SET            │
└─────────────────────────────────────┘
                    │
                    ▼
┌─────────────────────────────────────┐
│  SET CENTROID COORDINATES AS         │───S304
│  VERTEX CANDIDATES                   │
└─────────────────────────────────────┘
                    │
                    ▼
              ┌───────────┐
              │    END    │
              └───────────┘
```

# FIG. 15

(a)

25

(b)

28

27

# FIG. 16

| SHAPE, PRINTING SUBSTRATE | TRIANGLE, HOLOGRAM | QUADRANGLE, HOLOGRAM | QUADRANGLE, PAPER |
|---|---|---|---|
| ORIGINAL IMAGE | | | |
| SIMULTANEOUS PROCESSING OF SMOOTHING AND SHADING DIFFERENCE ENHANCEMENT | | | |
| BINARIZED IMAGE | | | |
| ACQUISITION OF SIDES OF POLYGON | | | |
| ACQUISITION OF COORDINATES OF VERTICES OF POLYGON | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6455679 B
- JP 6708981 B
- JP 4930789 B
- EP 2983134 A1
- US 2013114911 A1